Europäisches Patentamt

European Patent Office

Office européen des brevets

(19)

(11) Veröffentlichungsnummer : **0 416 153 B1**

## (12)   EUROPÄISCHE PATENTSCHRIFT

(45) Veröffentlichungstag der Patentschrift :
**30.11.94 Patentblatt 94/48**

(21) Anmeldenummer : **89116558.1**

(22) Anmeldetag : **07.09.89**

(51) Int. Cl.⁵ : **G06F 7/52**

(54) **Verfahren für Datenverarbeitungsanlagen zur Division von, zu Beginn jeweils normalisierten, beliebig langen Operanden und Divisionswerk zur Durchführung des Verfahrens.**

(43) Veröffentlichungstag der Anmeldung :
**13.03.91 Patentblatt 91/11**

(45) Bekanntmachung des Hinweises auf die
Patenterteilung :
**30.11.94 Patentblatt 94/48**

(84) Benannte Vertragsstaaten :
**AT BE CH DE ES FR GB IT LI NL SE**

(56) Entgegenhaltungen :
**EP-A- 0 158 530**
**EP-A- 0 192 420**
**IBM TECHNICAL DISCLOSURE BULLETIN**
**Band 30, Nr. 6, November 1987, Seiten**
**415-419, Armonk NY, USA; "Radix 16 Divider"**

(56) Entgegenhaltungen :
**IBM TECHNICAL DISCLOSURE BULLETIN**
**Band 24, Nr. 11b, April 1982, Seiten 5812-5819,**
**New York, USA; K.G. TAN; Transformed**
**High-Radix Division for High Performance**
**Computers" "**
**PROCEEDINGS OF THE SYMPOSIUM ON**
**COMPUTER ARITHMETIC 1987, Seiten 73-79,**
**IEEE Comp. Soc. Press, Como, Italien; J. FAN-**
**DRIANTO: "Algorithm for High Speed Shared**
**Radix 4 Division and Radix 4 Square-Root"**

(73) Patentinhaber : **Siemens Nixdorf**
**Informationssysteme Aktiengesellschaft**
**Fürstenallee 7**
**D-33102 Paderborn (DE)**

(72) Erfinder : **Torno, Daniel, Dr.**
**226, Rue de Tolbiac**
**F-75013 Paris (FR)**

(74) Vertreter : **Fuchs, Franz-Josef, Dr.-Ing. et al**
**Postfach 22 13 17**
**D-80503 München (DE)**

## Beschreibung

Die Erfindung betrifft ein Verfahren für Datenverarbeitungsanlagen zur Division von zu Beginn jeweils normalisierten, beliebig langen Operanden gemäß dem Oberbegriff des Patentanspruches 1 und ein entsprechendes Divisionswerk zur Durchführung des Verfahrens.

In Datenverarbeitungsanlagen sind zur Verarbeitung von Divisionsoperanden eigene Divisionswerke vorhanden. Ein bekanntes Verfahren, das einem derartigen Divisionswerk zugrundeliegt, ist das vorausschauende 2-Bit-Divisionsverfahren ohne Restwertrekonstruktion (Two-Bit-Lookahead-Non-Restoring-Verfahren). Dieses Verfahren, bei dem pro Divisionszyklus zwei Bits für den Quotienten aus den zu Beginn normalisierten Operanden beliebiger Länge bereitgestellt werden, wird auch als Radix-4-Division (SRT) bezeichnet - man siehe z.B. Atkins: "Higher-Radix Division Using Estimates of the Divisor and Partial Remainders"; IEEE Transactions on Computers, Vol. 17, No. 10, October 1968 pp 925 bis 934.

Diese Division genügt folgender rekursiven Beziehung

$$p_{j+1} = r \times p_j - q_{j+1} \times d ,$$

wobei j den Rekursivindex, $p_j$ den Teilrest im j-ten Zyklus, r die Radixzahl und d den Divisor bezeichnet. Das pro Divisionsschritt zu subtrahierende Divisorvielfache ($q_{j+1} \times d$) beinhaltet den jeweiligen Quotientenwert ($q_{j+1}$). Bei der fortgesetzten Subtraktion kann das Divisorvielfache positive und negative Werte, sowie den Wert Null annehmen.

Die Wahl der Anzahl n von Divisorvielfachen muß der Ungleichung genügen:

$$|p_{j+1}| \leqq n \times d / (r-1) .$$

Von den bei der Radix-4-Division erforderlichen Vielfachen in Form des einfachen, zweifachen und dreifachen Divisors sind die beiden erstgenannten Vielfachwerte leicht zu erzeugen, während das dreifache Divisorvielfache aufgrund zusätzlichen Zeit- und/oder Schaltungsaufwands, z. B. durch Addition des ein- und zweifachen Divisors und Speicherung des Additionsergebnisses in einem Register, in der Regel nicht verwendet wird.

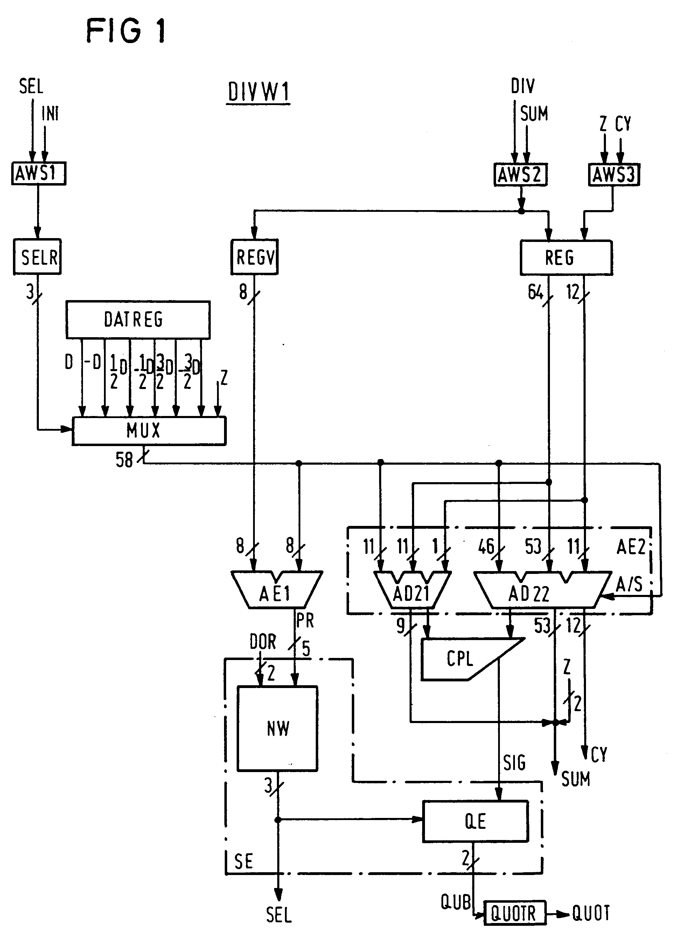

Für den Fall $2 \times n \geqq r-1$ ($n = 2$, $r = 4$) entsteht eine Redundanz in der Weise, daß von mehreren Divisorvielfachen eines auszuwählen ist - man siehe Figur 1, Seite 927. Dadurch brauchen bei den einzelnen Subtraktionen weniger Bitstellen des Divisors und Teilrests berücksichtigt zu werden, was zu zeitlichen und schaltungstechnischen Einsparungen führt. Bei Fehlen einer Redundanz ist ein Vergleich des Divisors und des jeweiligen Teilrests für eine maximale Genauigkeit über die gesamte Operandenlänge durchzuführen. Für eine Verringerung der Ausführungszeit pro Divisionszyklus ist die Wahl der Anzahl von Divisorvielfachen entsprechend einer maximalen Redundanz wünschenswert, wobei aber die Eindeutigkeit der Auswahl den begrenzenden Faktor darstellt.

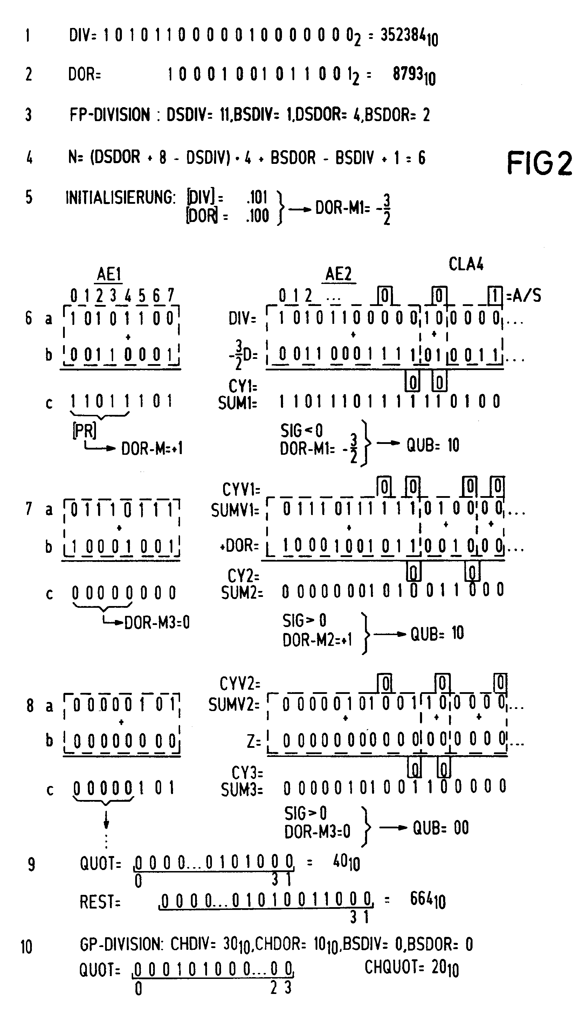

In einem weiteren Beitrag wird ein Algorithmus für die Radix-4-SRT-Division angegeben - man siehe Jan Fandrianto, "Algorithm for High Speed Shared Radix 4 Division and Radix 4 Square -Root", Proceedings of the Symposium on Computer Arithmetic, June 1987, pp. 73 - 79, IEEE Comp. Soc. Press, Como, Italy. Darin ist zur Erzeugung einer minimalen Redundanz die Verwendung des einfachen und zweifachen Divisors als Divisorvielfache beschrieben. Das Blockschaltbild in Figur 2 enthält einen Carry-Save-Adder (CSA) für die Addition bzw. Subtraktion eines ausgewählten Divisorvielfachen zum bzw. vom Teilrest, der jeweils in eine Summen- und eine Übertragskomponente aufgespalten ist. Der Addierer bietet den Vorteil einer bitparallelen Addition bzw. Subtraktion pro Divisionszyklus, dessen Verarbeitungszeit somit weitgehend von der Länge der Operandenmantisse unabhängig ist.

Die pro Divisionszyklus erzielten Quotientenbits werden in einer redundanten Form entsprechend ihrer jeweiligen Vorzeichen gespeichert. Der Nachteil liegt in ihrer getrennten Aufbereitung, für die zusätzliche Schalteinrichtungen und Register notwendig sind, während ansonsten lediglich ein Quotientenregister genügt. Für die Vorhersage eines Divisorvielfachen (bzw. der Quotientenbits) wird wegen der überlappenden Gebiete in der Redundanzdarstellung, man siehe Figur 1 auf Seite 74, ein Carry-Lookahead-Adder (CLA) über lediglich die ersten acht Bitstellen des Teilrests verwendet, wobei jedem Eingang des Addierers die Summen- und Übertragskomponente einer Bitstelle des jeweiligen Teilrests zugeführt wird.

Weiterhin ist im Blockschaltbild gemäß Figur 2 auf Seite 74 eine Umsetzeinrichtung für die Umwandlung des verkürzten, im Zweierkomplement dargestellten Additionsergebnisses in eine Betrags/Vorzeichen-Darstellung vorgesehen, von deren Ausgangssignalen nur ein Bruchteil zur Ansteueradresse für eine nachfolgende Tabelle zusammengefaßt und ein Signal als zusätzlicher Steuerparameter für die Eindeutigkeit einiger Einträge in dieser Tabelle verwendet wird.

Die Tabelle, in der die Divisorvielfachen bzw. Quotienten eingetragen sind, ist in Form eines programmierbaren Speicherfeldes (PLA) realisiert und weist eine Vielzahl von Einträgen mit lediglich positiven Werten auf, wobei an drei Stellen die Einträge nicht eindeutig sind, sondern abhängig vom Vorzeichen des Teilrests und obengenanntem Steuerparameter unterschiedliche Werte annehmen können. Der Zeitaufwand für die Ansteuerung einer derart komplexen Tabelle und für die Auswahl eines geeigneten Divisorvielfachen wegen der Mehrdeutigkeit einzelner Einträge wirkt sich nachteilig auf die Verarbeitungszeit pro Divisionszyklus aus. Darüberhinaus sind am Ende der Division noch zwei Iterationsschritte mit einem zusätzlichen Carry-Lookahead-Adder (CLA) über die gesamte Mantissenlänge der Operanden zur Erzielung des Quotienten in korrekt gerundeter Form notwendig.

Daher liegt der Aufgabe der vorliegenden Erfindung eine Modifikation des Two-Bit-Lookahead-Non-Restoring-Divisionsverfahrens und ein entsprechender Aufbau eines Divisionswerkes zugrunde, das eine schnelle Division zweier Operanden unabhängig von der Operandenlänge durch eine möglichst kurze Verarbeitungszeit für einen Divisionszyklus ermöglicht.

Diese Aufgabe wird hinsichtlich des Verfahrens durch die Merkmale des Patentanspruches 1 gelöst.

Die Auswahl einer Anzahl von Divisorvielfachen für eine maximal redundante Division erlaubt eine geringere Genauigkeit des verwendeten Divisors, inklusive seiner Vielfachen, und des Dividenden bzw. jeweiligen Teilrests für die Generierung von Quotientenbits. Der Zeitaufwand für die Bereitstellung der einzelnen Divisorvielfachen ist wegen der Verwendung verkürzter Operanden in Verbindung mit der eindeutigen Festlegung eines korrekten Vielfachen trotz der erhöhten Redundanz gering.

Der für die Ermittlung des ersten Divisorvielfachen notwendige Initialisierungsschritt und/oder die Erzeugung eines Divisorvielfachen für maximale Redundanz kann unter Umständen zu Verlustzeiten führen, die aber durch den Zeitgewinn in jedem Divisionszyklus selbst mehr als kompensiert werden, insbesondere bei der Division von Operanden langer Formate, bei der eine Vielzahl von Zyklen notwendig ist.

Zur Verschnellerung der Divisionszykluszeit trägt neben der Verwendung von verkürzten Operanden, wobei sogar eine nochmalige Verringerung für die Divisorvielfachenauswahl vorgesehen ist, auch das Merkmal bei, daß bei der Verkürzung auf k Bitstellen mögliche Überträge von niederwertigeren Bitstellen nicht berücksichtigt zu werden brauchen. Die beiden Quotientenbits werden pro Divisionsschritt von einer weiteren Einrichtung in einfacher und schneller Weise bereitgestellt, indem als Ansteuerparameter lediglich das Vorzeichen des jeweils ermittelten unverkürzten Teilrests und das zum Divisionsschritt jeweils gehörige Vielfache dienen.

Bei Auftreten eines negativen Teilrests am Ende einer durchgeführten Festpunktdivision wird zur Festlegung des richtigen Restwerts gemäß einer Weiterbildung der Erfindung eine Korrekturaddition mit dem zuletzt ermittelten Divisorvielfachen durchgeführt.

Gemäß weiterer Ausbildungen des erfindungsgemäßen Verfahrens wird die Anzahl der für einen korrekten Quotienten ausreichenden Quotientenbitstellen abhängig von den Schiebeamplituden zur Generierung eines normalisierten Dividenden bzw. Divisors bei einer Division von Festpunkt- bzw. Gleitpunktoperanden durchgeführt. Der Wert der ersten Quotientenbitstelle ist bei letztgenannter Division ebenfalls zu berücksichtigen, wobei eine Anpassung der Quotientencharakteristik bei einer eventuell auftretenden Verschiebung der Quotientenbitmantisse erforderlich ist.

Durch Zusammenfassung von jeweils zwei aufeinanderfolgenden Divisionsschritten gemäß einer weiteren Ausgestaltung des erfindungsgemäßen Verfahrens lassen sich wegen des pro Divisionsschritt erzielten Zeitgewinns vier Quotientenbits in einem Maschinenzyklus erzeugen, wobei eine feste Zuordnung zwischen jeweils einem Phasentakt eines vorhandenen Zweiphasentaktrasters und einem Divisionsschritt zur Weiterleitung des jeweils zuvor ermittelten Operanden für den nächstfolgenden Divisionsschritt besteht.

Ein Divisionswerk zur Durchführung des erfindungsgemäßen Verfahrens gemäß Patentanspruch 6 beinhaltet mehrere Auswahlschalter zur Durchschaltung des unverkürzten Teilrests oder des Dividenden in Summen-Übertrags-Darstellung, sowie zur Weiterleitung von Steuerinformationen an eine Multiplexeinrichtung, an deren Dateneingänge die Ausgänge der die einzelnen Divisorvielfachen enthaltenden Datenregister angeschlossen sind. Die Anordnung eines Addierers zur bitparallelen Verarbeitung der jeweiligen Summen- und Übertragskomponente sorgt im Berechnungspfad für den unverkürzten Teilrest für eine schnelle Addition.

Die Eingangssignale des parallel geschalteten ersten Addierers sind lediglich mit einem begrenzten Anteil der die Summenkomponenten tragenden Ausgangssignale zur Bildung eines verkürzten Additionsergebnisses verbunden. Die nachgeschaltete, aus den beiden Einheiten zur Ausgabe der Auswahlsignale für die Divisorvielfachen bzw. zur Ausgabe zweier Quotientenbits pro Divisionsschritt bestehende Schalteinrichtung weist somit lediglich eine geringe Anzahl von Eingangs- und Ausgangssignalen auf, wodurch die den Einheiten zugrundeliegenden Funktionen schnell durchführbar sind. Die beiden Einheiten sind nämlich im wesentlichen aus der Kombination von UND-/ODER-Gliedern bzw. aus der Verknüpfung von UND-/ODER-Gliedern mit bistabilen Kippstufen zusammengesetzt.

Vorteilhafte Ausgestaltungen des Divisionswerkes benützen für den Addierer zur Bestimmung des unverkürzten Teilrests mehrere Teiladdierer für die Bereitstellung von parallel an ihren Ausgängen anliegenden Übertragssignalen, aus denen das Vorzeichen des unverkürzten Teilrests pro Divisionsschritt ableitbar ist. Das Register zur Übernahme der Quotientenbits pro Divisionsschritt ist als Schieberegister ausgeführt, dessen vorheriger Inhalt jeweils um zwei Bitstellen nach höherwertigen Bitstellen verschiebbar ist.

Durch Hintereinanderschaltung von zwei in gleicher Weise aufgebauten Divisionswerken lassen sich vier Quotientenbits pro Maschinenzyklus erzeugen, was zu einer wesentlich schnelleren Verarbeitungszeit für die Division zweier Operanden führt.

Einzelheiten der Erfindung werden anhand eines in der Zeichnung dargestellten Ausführungsbeispiels näher erläutert. Im einzelnen zeigen

FIG 1 ein Blockschaltbild des erfindungsgemäßen Divisionswerkes,

FIG 2 ein Divisionsbeispiel,

FIG 3 die dem Divisionsbeispiel in FIG 2 zugrundegelegten Tabellen für die Divisorvielfachen- und Quotientenbitauswahl,

FIG 4 ein Blockschaltbild eines zweistufig aufgebauten Divisionswerkes.

FIG 1 zeigt das Blockschaltbild eines nach dem Verfahren gemäß der Erfindung arbeitenden Divisionswerkes DIVW1. Aus Darstellungsgründen ist bei den Signalen die Anzahl der jeweils parallel geschalteten Leitungen angegeben.

In einem Initialisierungsschritt vor Beginn der eigentlichen Division werden die normalisierten Operanden, Divisor DOR und Dividend DIV, bereitgestellt, wobei das Divisorvielfache 1/2 D aus dem Divisor DOR in bekannter Weise durch eine Schiebeoperation ermittelt werden kann. Die Bereitstellung erfolgt z. B. entweder seriell, sodaß der Wert 3/2 D durch eine parallel zum Ladevorgang des Dividenden DIV ablaufende Addition des halben Divisors 1/2 D zum Divisor D generiert wird, oder parallel, wobei die Addition im Anschluß an die Bereitstellung durchgeführt wird. Weiterhin werden in der Initialisierungsphase Informationssignale INI zur Auswahl des Divisorvielfachen für den ersten Divisionsschritt zur Verfügung gestellt. Von den übrigen Vielfachen werden die negativen Werte jeweils aus den positiven durch Invertierung der einzelnen Bitstellen gewonnen, während der Wert Z an jeder Bitstelle eine Null aufweist.

Die einzelnen Werte 1/2 D, D und 3/2 D sind in Datenregistern DATREG gespeichert, deren invertierte und nicht invertierte Ausgänge jeweils mit den Dateneingängen einer Multiplexeinrichtung MUX verbunden sind. Die Durchschaltung der zu einem Vielfachen gehörigen Datensignale an die nachfolgenden Addierer AE1 und AE2 erfolgt abhängig von einer Steuerinformation, die im Register SELR zwischengespeichert ist. Die Steuerinformation besteht aus den Signalen SEL, die im jeweils vorhergehenden Divisionsschritt von der Schalteinrichtung SE ausgesendet werden. Durch den auftretenden zeitlichen Verzug ist es daher notwendig, zur Auswahl eines Divisorvielfachen für den ersten Divisionsschritt die Steuerinformation INI bereits in der Initialisierungsphase bereitzustellen. Die Weiterleitung einer der beiden Steuerinformationen wird durch den Auswahlschalter AWS1 erreicht.

Für den ersten Divisionsschritt wird der aus einem Summen- und einem Übertragsteil bestehende Dividend DIV bereitgestellt, wobei der Summenteil mit dem Dividenden DIV identisch ist, da zu Beginn einer Division Überträge noch nicht aufgetreten sind und daher den Wert Z, stellvertretend für lauter Nullen, annehmen. Ebenso weist der für jeden weiteren Divisionsschritt ermittelte Teilrest eine Summenkomponente SUM sowie eine Übertragskomponente CY auf. Die Summen- bzw. Übertragsteile werden getrennt voneinander von den Auswahlschaltern AWS2 bzw. AWS3 zur Speicherung in Eingangsregistern REG durchgeschaltet. Hingegen werden lediglich acht Bitstellen des unverkürzten Dividenden DIV im ersten oder des unverkürzten Teilrests SUM in jedem weiteren Divisionsschritt in einem weiteren Eingangsregister REGV abgelegt, wobei keinerlei Übertragsstellen gespeichert werden.

Im Datenpfad für die unverkürzte Addition ist der Addierer AE2 angeordnet, der aus den Teiladdierern AD21 und AD22 zusammengesetzt ist. Die Teiladdierer bestehen aus einem oder mehreren Carry-Lookahead-Addierer (CLA), mit denen eine schnelle Addition durch parallele Bildung von Teilsummen über geringe Datenbreiten der Summanden erzielt wird. Dazu ist die Aufspaltung des Dividenden bzw. Teilrests in eine Summen- und Übertragskomponente notwendig. So ist der Teiladdierer AD22 aus mehreren Addierern mit jeweils vier oder zwei Summenbits aufgebaut, deren maximale Anzahl von der Dividendenlänge sowie von der Art der Division-Festpunkt oder Gleitpunkt- abhängig ist. Der modulartige Aufbau ermöglicht die Division zweier Operanden unabhängig von ihrer Länge, so daß bei einer eventuell auftretenden Änderung das Divisionswerk nicht neu aufgebaut werden muß.

In dem gewählten Ausführungsbeispiel umfaßt das jeweils am Ausgang der Multiplexeinrichtung MUX anliegende Divisorvielfache maximal 57 Bitstellen, dem ein Zustandssignal A/S, das bei einer auszuführenden Addition bzw. Subtraktion den Wert Null bzw. Eins annimmt, als Übertragsbit für den letzten Carry-Lookahead-Addierer angehängt ist. Bei einer Festpunktdivision ist das Vielfache lediglich 32 Bit lang, so daß die danach folgenden Bitstellen für eine Addition die Werte Null bzw. für eine Subtraktion die Werte Eins annehmen.

Für die Berechnung des unverkürzten Teilergebnisses pro Divisionsschritt werden einerseits im Teiladdierer AD21 die Bitstellen 0 bis 10 der Summenkomponente des Dividenden DIV bzw. Teilrests SUM, die entsprechenden Bitstellen des ausgewählten Divisorvielfachen, sowie die zugehörige Bitstelle der Übertragskomponente Z bzw. CY aufaddiert, während andererseits der Teiladdierer AD22 aus einem Carry-Lookahead-Addierer über die Bitstellen 11 bis 12 sowie aus weiteren Carry-Lookahead-Addierern über jeweils vier Datenbits für die Bitstellen 13 bis 56 zusammengesetzt ist. An den Ausgängen des Teiladdierers AD22 erscheint das Additionsergebnis wiederum aufgespalten in eine Summen-

und eine Übertragskomponente SUM und CY für die Weiterverarbeitung im jeweils darauffolgenden Divisionsschritt. Durch die Verschiebung des Zwischenergebnisses um zwei Bitstellen nach links zu höherwertigen Bitstellen nach jedem Divisionsschritt erscheinen an den Ausgängen des Teiladdierers AD21 lediglich neun Ausgangssignale. Die beiden niedrigstwertigen Bitstellen im Summenteil des jeweiligen Teilrests werden dann mit Nullen Z aufgefüllt.

Von jedem der Carry-Lookahead-Addierer werden parallel ein Propagate-Signal, das einen Übertrag auf Grund eines Übertragseingangs vom jeweils benachbarten Addierer liefert, sowie ein Generate-Signal, das einen Übertrag auf Grund der ausgeführten Addition über die Datenbits der Teilsummanden führt, erzeugt und einer Einheit CPL zugeführt, die in bekannter Weise aus den ankommenden Übertragssignalen das Vorzeichen SIG des unverkürzten Teilrests bildet und aussendet.

Gleichzeitig zur Ermittlung des unverkürzten Teilrests erfolgt die Berechnung der Auswahlinformation SEL für den jeweils nächstfolgenden Divisionsschritt. Dazu werden lediglich die ersten acht Bitstellen des ausgewählten Divisorvielfachen und die Ausgänge des die gleiche verringerte Anzahl von Bitstellen aufweisenden Eingangsregisters REGV auf die Eingänge des Addierers AE1 geführt, der beispielsweise ebenfalls als Carry-Lookahead-Addierer ausgeführt ist. Vom Additionsergebnis werden nur die ersten fünf Bitstellen PR weiterverarbeitet, indem sie zusammen mit dem verkürzten Divisor DOR die Eingangssignale einer Schalteinrichtung SE bilden.

In dieser Einrichtung SE ist eine erste Einheit NW angeordnet, die im wesentlichen ein Verknüpfungsnetzwerk darstellt, an dessen Ausgängen die Signale SEL für die Ansteuerung der Multiplexeinrichtung MUX zur Auswahl des nächsten Divisorvielfachen anliegen. Die Auswahlsignale SEL werden mit dem von der Einheit CPL ermittelten Vorzeichen SIG in einer zweiten Einheit QE zu den Quotientenbits QUB verknüpft, die in einem als Schieberegister ausgebildeten Quotientenregister QUOTR abgelegt werden. Die Verknüpfungseinheit QE besteht dabei aus der Kombination einfacher UND- bzw. ODER-Gatter. Am Ende der Division kann der Quotient QUOT aus Dividend und Divisor dem Quotientenregister QUOTR schließlich entnommen und bei einer Festpunktdivision der Rest durch Addition der Summenkomponente SUM und der Übertragskomponente CY des jeweils zuletzt gewonnenen Teilrests berechnet werden. Sollte dieser Teilrest negativ sein, so muß eine Korrekturaddition durch den Addierer AE2 mit den zuletzt ausgewählten Divisorvielfachen ausgeführt werden.

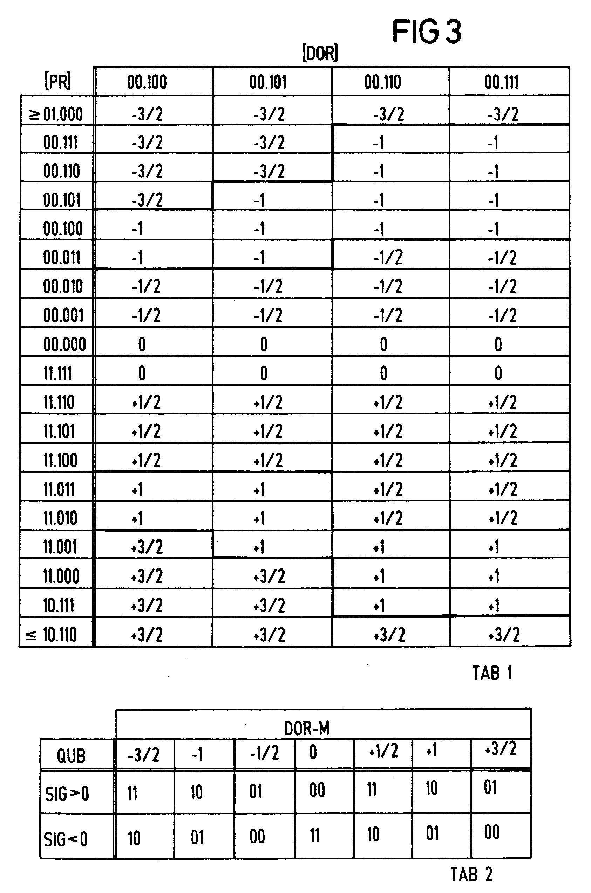

Die Einheit NW, die abhängig von den Eingangsparametern DOR, PR die Auswahlsignale SEL liefert, kann zur Realisierung der Tabelle TAB1 gemäß Figur 3 als Direktzugriffsspeicher (RAM) ausgeführt sein. Die beiden Signalbündel DOR, PR dienen dann als Ansteueradressen für das Auslesen genau eines Divisorvielfachs pro Divisionsschritt. Eine möglichst kurze Verarbeitungszeit für die Division läßt sich durch diese Lösungsvariante nur schwer erreichen, da die Speicherzugriffszeit den Anforderungen bei sehr kurzen Maschinenzykluszeiten unter Umständen nicht mehr genügt.

Bei Verwendung einer Multiplexeinrichtung als Einheit NW ist zur Zusammenfassung aller möglichen Eingangskombinationen und Zuordnung zu genau einem auszuwählenden Divisorvielfachen eine Vielzahl von UND- bzw. ODER-Gattern mit jeweils mehreren Eingangssignalen nötig, was zu erheblichen Verlustzeiten durch die Schaltzeiten der Bauelemente führt.

In der Tabelle TAB1 gemäß Figur 3 kann man erkennen, daß jeweils mehrere Einträge zu Gebieten zusammengefaßt sind, die genau ein Divisorvielfaches enthalten. Daher ist es möglich, die vorhandene Redundanz in der Art auszunutzen, daß nur jeweils die für die eindeutige Kennzeichnung eines Gebietes notwendigen Signale des verkürzten Teilrests PR und/oder des verkürzten Divisors DOR von Gattern ausgewertet werden. Somit weist das Verknüpfungsnetzwerk NW eine minimale Anzahl von Gattern auf, durch die die wenigen Eingangssignale so miteinander verknüpft werden, daß aus den an den Ausgängen des Netzwerkes angeordneten Latches zur Speicherung der Signalzustände die Auswahlsignale SEL übernommen werden können. Somit ist ein schneller Zugriff auf die einzelnen Divisorvielfachen durch geringe Lauf- und Schaltzeiten gegeben, was zu einer wesentlich schnelleren Verarbeitungszeit für einen Divisionszyklus führt.

Zur Verdeutlichung des Divisionsprinzips ist in FIG 2 in Verbindung mit den in FIG 3 abgebildeten Tabellen ein Divisionsbeispiel für eine Festpunktdivision angegeben. Voneinander dividiert werden die in Zeile 1 und 2 enthaltenen Operanden, wobei der Dividend DIV und der Divisor DOR als Binärzahlen und als Dezimalzahlen dargestellt sind.

Im Falle einer Festpunktdivision sind der Dividend 64 Bit, Divisor, Quotient und Rest jeweils 32 Bit lang. Dementsprechend sind die Operanden für eine normalisierte Darstellung, bei der in der ersten Bitstelle eine Eins stehen muß, um die in Zeile 3 dargestellten Amplituden DSDIV und BSDIV bzw. DSDOR und BSDOR nach höherwertigen Bitstellen zu verschieben. Die Schiebeamplitude DSDIV bzw. DSDOR beschreibt dabei die Verschiebung von zu Gruppen von jeweils vier Bitstellen zusammengefaßten Datenbits für den Dividenden bzw. Divisor, während die Schiebeamplitude BSDIV bzw. BSDOR auf die Verschiebung der Datenbits des zugehörigen Operanden um jeweils eine Bitstelle Bezug nimmt. Eine Vorschrift zur Berechnung der Anzahl N von Quotientenbits für eine Division ist in Zeile 4 angegeben. Abhängig von den Schiebeamplituden ist in dem gewählten Beispiel N=6, so daß drei Divisionsschritte zur Festlegung des Quotienten genügen.

Vor Beginn der eigentlichen Division mit dem ersten Divisionsschritt wird in einem Initialisierungsschritt das Divisorvielfache DOR-M1 für diesen ersten Divisionschritt ermittelt. Dazu ergeben die verkürzten Eingangsparameter in Zeile 5, angewandt auf die in FIG 3 abgebildete Tabelle TAB1, den Wert -3/2. Der verkürzte Dividend [DIV] wird anstelle des verkürzten Teilrests [PR] für den Initialisierungsschritt gesetzt. Aus Darstellungsgründen sind die Operanden in den folgenden Zeilen nicht in ihrer vollen Länge, sondern verkürzt angegeben, wobei sowohl der Divisor als auch seine Vielfachen auf 15 Datenbits beschränkt sind.

Für den ersten Divisionsschritt gemäß Zeile 6a bis 6c wird im Teiladdierer AE2 das zuvor ermittelte Divisorvielfache -3/2 D zum Dividenden addiert. Dazu werden der Inhalt der ersten 11 Bitstellen beider Operanden und das zum Dividenden gehörige Übertragsbit in der neunten Bitstelle in einem ersten Carry-Lookahead-Addierer (CLA) summiert, während in den darauffolgenden Addierern gleicher Art nur jeweils zwei bzw. vier Summenbitstellen mit den entsprechenden Übertragsbitstellen verarbeitet werden. Da eine Subtraktion im ersten Divisionsschritt durchzuführen ist, nimmt das Übertragsbit des letzten Addierers CLA4 sowie die nach der beschränkten Anzahl von Datenbits des Divisorvielfachen folgenden niederwertigen Bitstellen jeweils den Wert Eins an.

Das erzielte Ergebnis ist wiederum in einen Summenteil SUM1 und einen Übertragsteil CY1 aufgespalten. Aus dem für den ersten Divisionsschritt ermittelten negativen Vorzeichen SIG und dem ausgewählten Divisorvielfachen DOR-M1 wird gemäß der Tabelle TAB2 in FIG 3 die Bitkombination 10 für die ersten beiden Quotientenbits QUB erzeugt.

Im ersten Teiladdierer AE1 werden die ersten acht Bitstellen des Dividenden in Zeile 6a zu den entsprechend verkürzten Bitstellen des ausgewählten Divisorvielfachs in Zeile 6b addiert. Vom Ergebnis in Zeile 6c werden die ersten fünf Bitstellen als verkürzter Teilrest [PR] zur Auswahl des Divisorvielfachen DOR-M2 für den zweiten Divisionsschritt verwendet, das gemäß Tabelle TAB1 in FIG 3 den Wert +1 annimmt.

In analoger Weise wird für den zweiten Divisionsschritt in den Zeilen 7a bis 7c und für den dritten Divisionsschritt in den Zeilen 8a bis 8c verfahren. Nach jedem Divisionsschritt wird der Teilrest SUM1, SUM2 oder SUM3 inklusive der Übertragsbits CY1, CY2 oder CY3 um jeweils zwei Bitstellen links verschoben, sodaß sich die Summenkomponenten SUM1, SUM2 mit ihren zugehörigen Übertragskomponenten CYV1, CYV2 ergeben. Auf Grund der auszuführenden Additionen in den beiden letzten Divisions schritten erhält die Übertragsbitstelle des jeweils letzten Addierers eine Null.

Somit ist am Ende der Division im Quotientenregister der Quotient QUOT als Binärzahl gemäß Zeile 9 enthalten. Auch verbleibt ein ebenfalls 15 Datenbits umfassender Restwert REST, der sich aus der Addition der Summenkomponente SUM3 und der Übertragskomponente CY3 des letzten Divisonsschrittes ergibt.

In Zeile 10 ist noch beispielhaft gezeigt, wie bei einer Gleitpunktdivision der Operanden DIV und DOR der Quotient QUOT im Quotientenregister gespeichert ist. Beispielsweise weist das Mantissenformat für die Divisionsoperanden und den Quotienten 24 Bitstellen auf.

Die zu dividierenden Operanden werden so normalisiert geliefert, daß Verschiebungen der Datenbits in den Mantissen lediglich abhängig von den Schiebeamplituden BSDIV und BSDOR erfolgen, die jeweils als maximal mögliche Größe den Wert drei annehmen können. Diese Schiebeamplituden BSDIV und BSDOR verursachen in Verbindung mit dem Wert des Quotienten QUOT in der höchstwertigen Bitstelle unter Umständen eine Ausrichtung der Quotientenmantisse und/oder ein Inkrementieren der Quotiencharakteristik CHQUOT. In dem gezeigten Beispiel wird die Mantisse um drei Bitstellen rechtsverschoben, während die Charakteristik, die aus der Subtraktion der Charakteristik von Dividend und Divisor CHDIV und CHDOR erzielt wird, nicht erhöht wird.

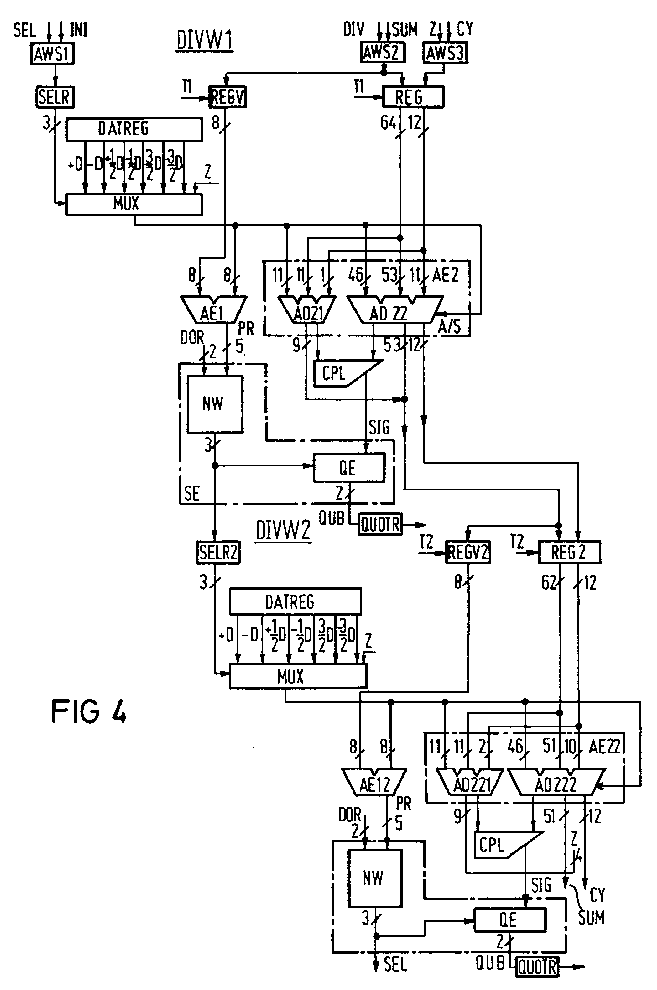

Zur Bildung eines zweistufigen Divisionswerkes wird gemäß dem Blockschaltbild in FIG 4 dem in FIG 1 dargestellten Divisionswerk DIVW1 eine zweite Stufe DIVW2 in Serie nachgeschaltet. Der Aufbau der Divisionsstufe DIVW2 erfolgt in analoger Weise zur Stufe DIVW1 unter Verwendung der Eingangsregister SELR2, REGV2 und REG2, sowie der Additionsstufen AE12 und AE22, gebildet aus den Teiladdierern AD221 und AD222. Der Teiladdierer AD221 weist nunmehr zwei Übertragssignale als Eingangssignale auf, während das Eingangsregister REG2 maximal 62 Ausgangssignale des vorgeschalteten Addierers AE2 aus der ersten Divisionsstufe DIVW1 übernimmt.

Der besondere Vorteil dieser Anordnung liegt darin, daß durch den einzelnen Stufen fest zugeordnete, unterschiedliche Taktphasensignale T1 und T2 für die Register REGV bzw. REG und REGV2 bzw. REG2 in einem Maschinenzyklus vier Quotientenbits erzeugt werden können. Die Register sind vorzugsweise als Latches realisiert, und durch die zwischengeschalteten Additionsstufen voneinander entkoppelt, wodurch die Laufzeiten verkürzt werden. Insbesondere bei Verringerung der Maschinenzykluszeit ist die kurze Verarbeitungszeit jeder einzelnen Divisionsstufe durch schnelle Bereitstellung der zur Auswahl eines Divisorvielfachen erforderlichen Signale SEL im Netzwerk NW maßgebend an der Generierung von zwei Quotientenbits pro Divisionsstufe be-

teilgt.

**Patentansprüche**

1.  Verfahren für Datenverarbeitungsanlagen zur Division von zu Beginn jeweils normalisierten, beliebig langen Operanden, bei dem in jedem Divisionsschritt zwei Bits für den Quotienten aus Dividend und Divisor bereitgestellt werden, wobei im ersten Divisionsschritt durch Subtraktion eines Divisorvielfachen vom Dividenden ein erster Teilrest gebildet und in jedem weiteren Divisionsschritt abhängig vom Vorzeichen des jeweils zuletzt erzielten Teilrests ein Divisorvielfaches zu diesem Teilrest addiert oder davon subtrahiert wird (Two-Bit-Lookahead-Non-Restoring-Verfahren),
    **dadurch gekennzeichnet,**
    - daß die Anzahl der Divisorvielfachen (DOR-M) entsprechend der für eine maximale Redundanz der zugrundeliegenden Division maßgebenden Anzahl gewählt wird,
    - daß eine Einrichtung (SE) für die Bereitstellung eines Divisorvielfachen (DOR-M) pro Divisionsschritt verwendet wird, in der das Divisorvielfache abhängig vom Divisor (DOR) und vom Wert des jeweiligen Teilrests (PR) eindeutig festgelegt ist, wobei für die Divisorvielfachen neben dem Wert Null (Z) positive bzw. negative Werte (z.B. ± D) entsprechend der durchzuführenden Addition bzw. Subtraktion vorgesehen sind,
    - daß in einem Initialisierungsschritt die Auswahl eines unverkürzten Divisorvielfachen (z. B. DOR-M1) für den ersten Divisionsschritt durch den auf i-Bitstellen (z. B. i = 5) verkürzten Dividenden (DIV) und den die gleiche Bitstellenanzahl aufweisenden Divisor (DOR) erfolgt,
    - daß im ersten Divisionsschritt das ausgewählte Divisorvielfache (z. B. - 3/2 D) in unverkürzter Form zur Bildung des ersten Teilrests (SUM1) bzw. gleichzeitig dazu in auf k (z. B. k = 8) Bitstellen verkürzter Form jeweils vom Dividenden (DIV) mit gleicher Anzahl von Bitstellen subtrahiert wird,
    - daß das verkürzte Subtraktionsergebnis zur Auswahl eines Divisorvielfachen (z. B. DOR-M2) für den nächstfolgenden Divisionsschritt auf i (z. B. i = 5) Bitstellen nochmals verringert wird,
    - daß in jedem darauffolgenden Divisionsschritt die Addition oder Subtraktion mit dem im jeweils vorausgegangenen Divisionsschritt ermittelten Divisorvielfachen und Teilrest in verkürzter und unverkürzter Form durchgeführt wird, wobei bei der Verkürzung auf k (z. B. k = 8) Bitstellen mögliche Überträge (CY) von niederwertigeren Bitstellen im jeweiligen Teilrest unberücksichtigt bleiben,
    - daß pro Divisionsschritt das Vorzeichen (SIG) des ermittelten unverkürzten Teilrests (z. B. SUM1) und das jeweils zugehörige Divisorvielfache (z. B. DOR-M1) die Ansteuersignale für eine Einrichtung (QE) zur Bereitstellung von jeweils zwei Quotientenbits (QUB) bilden, und
    - daß nach jedem Divisionsschritt der unverkürzte Teilrest (z. B. SUM1) jeweils um zwei Bitstellen nach höherwertigen Bitstellen verschoben wird.

2.  Verfahren nach Anspruch 1,
    **dadurch gekennzeichnet,**
    daß bei einer Division von Festpunktoperanden und Auftreten eines negativen Teilrests nach dem letzten Divisionsschritt eine Addition des zuletzt ausgewählten Divisorvielfachen mit dem negativen Teilrest über die unverkürzten Operandenlängen durchgeführt wird.

3.  Verfahren nach Anspruch 1 oder 2,
    **dadurch gekennzeichnet,**
    daß bei einer Division von Festpunktoperanden die Anzahl der zu ermittelnden Quotientenbits (QUOT) abhängig von den für die Darstellung des Dividenden und des Divisors in normalisierter Form erforderlichen Schiebeamplituden (DSDIV, BSDIV, DSDOR, BSDOR) gebildet wird.

4.  Verfahren nach einem der Ansprüche 1 bis 3,
    **dadurch gekennzeichnet,**
    - daß bei einer Division von Gleitpunktoperanden die Anzahl der Quotientenbits (QUOT) abhängig von der Position des ersten Bits in der Quotientenmantisse und somit von den Schiebeamplituden des Dividenden (BSDIV) und des Divisors (BSDOR), sowie abhängig vom Wert des in der ersten Bitstelle ermittelten Quotientenbits gebildet wird, und
    - daß bei Verschiebung des Quotientenbits die Quotientencharakteristik (CHQUOT) entsprechend erhöht wird.

5.  Verfahren nach einem der Ansprüche 1 bis 4,
    **dadurch gekennzeichnet,**
    daß jeweils zwei aufeinanderfolgende Divisionsschritte unter Anwendung eines Zweiphasentaktrasters zusammengefaßt werden, bei dem jeweils ein Phasentakt einem Divisionschritt zur Weiterleitung des jeweils ermittelten Teilrests in verkürzter und unverkürzter Darstellung für den nächstfolgenden Divisionsschritt fest zugeordnet ist.

6. Divisionswerk für Datenverarbeitungsanlagen zur Division von zu Beginn jeweils normalisierten, beliebig langen Operanden, bei dem in jedem Divisionsschritt zwei Bits für den Quotienten aus Dividend und Divisor bereitgestellt werden, wobei im ersten Divisionsschritt durch Subtraktion eines Divisorvielfachen vom Dividenden ein erster Teilrest gebildet und in jedem weiteren Divisionsschritt abhängig vom Vorzeichen des jeweils zuletzt erzielten Teilrests ein Divisorvielfaches zu diesem Teilrest addiert oder davon subtrahiert wird,

**gekennzeichnet** durch die Kombination folgender Merkmale:

- Auswahlschaltern (AWS1 ... AWS3), von denen zwei Auswahlschalter (AWS2 und AWS3) für die Durchschaltung des unverkürzten Dividenden oder Teilrests mit jeweils einem Summen-(DIV bzw. SUM) und einem Übertragsteil (Z bzw. CY) vorgesehen sind, während ein weiterer Auswahlschalter (AWS1) an seinen Eingängen die Auswahlinformation (SEL und INI) für das im ersten und jedem weiteren Divisionsschritt zu verwendende Divisorvielfache aufweist,
- Eingangsregistern (SELR, REGV, REG), deren Eingänge mit den Ausgängen der Auswahlschalter (AWS1 ... AWS3) verbunden sind, wobei in einem Register (REGV) der jeweils auf k (z. B. k = 8) Bitstellen verkürzte Anteil des Dividenden (DIV) bzw. Teilrests (SUM) gespeichert ist,
- einer Multiplexeinrichtung (MUX) zur Durchschaltung eines der in vorgeschalteten Datenregistern (DATREG) gespeicherten Divisorvielfachen, deren Steuereingänge an die Ausgänge des die Auswahlinformation enthaltenden Eingangsregisters (SELR) angeschlossen sind,
- parallel geschalteten Addierern (AE1 und AE2), von denen dem ersten Addierer (AE1) die k (z. B. k = 8) Bitstellen des jeweils durchgeschalteten Divisorvielfachen sowie der auf ebenfalls k (z. B. k = 8) Bitstellen begrenzte Anteil des Dividenden (DIV) bzw. Teilrests (SUM) als Eingangssignale zuführbar sind, während die Eingänge des zweiten Addierers (AE2) mit den Ausgängen der die Summenbits (DIV bzw. SUM) und die Übertragsbits (Z bzw. CY) des unverkürzten Dividenden bzw. Teilrests enthaltenden Eingangsregister (REG) verbunden sind,
- einer aus zwei Einheiten (NW und QE) aufgebauten Schalteinrichtung (SE), von denen der ersten Einheit (NW) zur Ausgabe der Informationssignale (SEL) für die Divisorvielfachenauswahl als Eingangssignale die an den Ausgängen des ersten Addierers (AE1) anliegenden Ergebnissignale sowie eine verringerte Anzahl der Ausgangssignale des den Divisor (DOR) enthaltenden Datenregisters zugeleitet werden, während der zweiten Einheit (QE) zur Ausgabe zweier Quotientenbits (QUB) das Vorzeichen (SIG) des unverkürzten Additionsergebnisses und die Ausgangssignale (SEL) der ersten Einheit (NW) zugeführt sind.

7. Divisionswerk nach Anspruch 6,
**dadurch gekennzeichnet**,
- daß der zweite Addierer (AE2) aus mehreren Teiladdierern (AD21, AD22) modulartig zusammengesetzt ist, die Teile des unverkürzten Teilrests aus den jeweils zugehörigen Summen- und Übertragsbits des vorherigen Teilrests und aus dem ausgewählten Divisorvielfachen parallel berechnen,
- daß die parallel an den Ausgängen der Teiladdierer (AD21 und AD22) anliegenden Übertragssignale aufgrund möglicher Überträge aus niederwertigeren Bitstellen und/oder aufgrund der ausgeführten Teiladditionen einer Einheit (CPL) zur Festlegung des Vorzeichens (SIG) zugeführt sind, und
- daß der Ausgang dieser Einheit (CPL) mit einem der Eingänge der in der Schalteinrichtung (SE) vorhandenen zweiten Einheit (QE) verbunden ist.

8. Divisionswerk nach Anspruch 6 oder 7,
**dadurch gekennzeichnet**,
daß der Schalteinrichtung (SE) ein Register (QUOTR) zur Übernahme der Quotientenbits (QUB) pro Divisionschritt nachgeschaltet ist, dessen vorheriger Inhalt jeweils um zwei Bitstellen nach höherwertigen Bitstellen verschiebbar ist.

9. Divisionswerk nach Anspruch 8,
**dadurch gekennzeichnet**,
daß zwei in Serie geschaltete, in gleicher Weise aufgebaute Divisionsstufen (DIVW1 und DIVW2) vorgesehen sind, wobei die Eingangsregister (SELR ... REG bzw. SELR2 ... REG2) jeder einzelnen Stufe als Zwischenspeicherelemente ausgeführt sind, die durch einen jeweils zugehörigen Phasentakt (T1 bzw. T2) steuerbar und durch die zwischengeschalteten Addierer (AE1 und AE2 bzw. AE12 und AE22) der jeweils nächstfolgenden Stufe voneinander entkoppelt sind.

## Claims

1. Method for data processing equipment for dividing arbitrarily long operands respectively normalized at the beginning, in which two bits for the quotient composed of dividend and divisor are provided in each division step, it being the case that in the first division step a first partial remainder is formed by subtracting a divisor multiple from the dividend, and in each further division step a divisor multiple is added to this partial remainder or subtracted therefrom as a function of the sign of the partial remainder respectively last achieved (two bit lookahead non-restoring method), characterized

   - in that the number of the divisor multiples (DOR-M) is selected in accordance with the number which is decisive for a maximum redundance of the basic division,
   - in that use is made for the purpose of providing one divisor multiple (DOR-M) per division step of a device (SE) in which the divisor multiple is uniquely determined as a function of the divisor (DOR) and of the value of the respective partial remainder (PR), positive and negative values (for example, ± D) being provided, in addition to the value zero (Z), for the divisor multiples in accordance with the addition and subtraction respectively to be carried out,
   - in that in an initialization step the selection of an unabbreviated divisor multiple (for example, DOR-M1) is performed for the first division step by the dividend (DIV), abbreviated to i bit positions (for example, i = 5) and by the divisor (DOR) having the same number of bit positions,
   - in that in the first division step, the selected divisor multiple (for example, - 3/2 D) is subtracted respectively from the dividend (DIV) having the same number of bit positions in unabbreviated form for the purpose of forming the first partial remainder (SUM1) or simultaneously therewith in a form abbreviated to k bit positions (for example, k = 8) bit positions,
   - in that the abbreviated subtraction result is again reduced to i (for example, i = 5) bit positions for the purpose of selecting a divisor multiple (for example, DOR-M2) for the next division step,
   - in that in each division step following thereupon the addition or subtraction is carried out using the divisor multiple, determined in the respectively preceding division step, and partial remainder in abbreviated and unabbreviated form, possible carries (CY) of lower-order bit positions in the respective partial remainder not being taken into account in the case of abbreviation to k (for example k = 8) bit positions,
   - in that, per division step, the sign (SIG) of the unabbreviated partial remainder (for example SUM1) determined and the respectively associated divisor multiple (for example, DOR-M1) form the control signals for a device (QE) for providing respectively two quotient bits (QUB), and
   - in that after each division step the unabbreviated partial remainder (for example SUM1) is shifted in each case by two bit positions towards higher-order bit positions.

2. Method according to Claim 1, characterized in that in the case of division by fixed-point operands and the occurrence of a negative partial remainder after the last division step, the last-selected divisor multiple is added to the negative partial remainder over the unabbreviated operand lengths.

3. Method according to Claim 1 or 2, characterized in that in the case of division by fixed-point operands the number of the quotient bits (QUOT) to be determined is formed as a function of the shift amplitudes (DSDIV, BSDIV, DSDOR, BSDOR) required for representing the dividend and the divisor in normalized form.

4. Method according to one of Claims 1 to 3, characterized in that in the case of division by floating-point operands the number of the quotient bits (QUOT) is formed as a function of the position of the first bit in the quotient fixed-point part and thus of the shift amplitudes of the dividend (BSDIV) and of the divisor (BSDOR), as well as as a function of the value of the quotient bit determined in the first bit position, and
   - in that given a shift in the quotient bit, the quotient characteristic (CHQUOT) is correspondingly increased.

5. Method according to one of Claims 1 to 4, characterized in that in each case two successive division steps are combined by using a two-phase clock grid in which in each case one phase clock pulse is permanently assigned to a division step for the purpose of onward routing of the respectively determined partial remainder in abbreviated and unabbreviated representations for the next division step.

6. Divider for data processing equipment for dividing arbitrarily long operands respectively normalized at the beginning, in which two bits for the quotient composed of dividend and divisor are provided in each division step, it being the case that in the first division step a first partial remainder is formed by subtracting a divisor multiple from the dividend, and in each further division step a divisor multiple is added to this partial remainder or subtracted therefrom as a function of the sign of the partial remainder respectively last achieved, characterized by the combination of the following features:

- selector switches (AWS1 ... AWS3), of which two selector switches (AWS2 and AWS3) are provided for switching through the unabbreviated dividend or partial remainder by means in each case of a sum part (DIV or SUM) and a carry part (Z or CY), while a further selector switch (AWS1) has at its inputs the selection information (SEL and INI) for the divisor multiple to be used in the first and each further division step,
- input registers (SELR, REGV, REG), whose inputs are connected to the outputs of the selector switches (AWS1 ... AWS3), the proportion of the dividend (DIV) or partial remainder (SUM) which is in each case abbreviated to k (for example k = 8) bit positions being stored in one register (REGV),
- a multiplexer (MUX) for switching through one of the divisor multiples stored in data registers (DATREG) connected upstream, whose control inputs are connected to the outputs of the input register (SELR) containing the selection information,
- adders (AE1 and AE2) which are connected in series and of which the first adder (AE1) can be fed the k (for example, k = 8) bit positions of the respectively switched-through divisor multiple as well as the portion, likewise limited to k (for example, k = 8) bit positions, of the dividend (DIV) or partial remainder (SUM) as input signals, while the inputs of the second adder (AE2) are connected to the outputs of the input registers (REG) containing the sum bits (DIV or SUM) and the carry bits (Z or CY) of the unabbreviated dividend or partial remainder,
- a switching device (SE) constructed from two units (NW and QE), of which the first unit (NW) is fed as input signals the result signals present at the outputs of the first adder (AE1) as well as a reduced number of the output signals of the data register containing the divisor (DOR) for the purpose of outputting the information signals (SEL) for the divisor multiple selection, while the second unit (QE) is fed the sign (SIG) of the unabbreviated addition result and the output signals (SEL) of the first unit (NW) for the purpose of outputting two quotient bits (QUB).

7. Divider according to Claim 6, characterized
- in that the second adder (AE2) is modularly assembled from a plurality of component adders (AD21, AD22) which calculate in parallel portions of the unabbreviated partial remainder from the respectively associated sum bits and carry bits of the previous partial remainder and from the selected divisor multiple
- in that because of possible carries from lower-order bit positions and/or because of the partial additions carried out, the carry signals present in parallel at the outputs of the component adders (AD21 and AD22) are fed to a unit (CPL) for determining the sign (SIG) and
- in that the output of this unit (CPL) is connected to one of the inputs of the second unit (QE) present in the switching device (SE).

8. Divider according to Claim 6 or 7, characterized in that connected downstream of the switching device (SE) is a register (QUOTR) for accepting the quotient bits (QUB) per division step, whose previous contents can be shifted in each case by two bit positions towards higher-order bit positions.

9. Divider according to Claim 8, characterized in that provision is made of two division stages (DIVW1 and DIVW2) which are connected in series and constructed in the same way, the input registers (SELR ... REG and SELR2 ... REG2) of each individual stage being designed as intermediate storage elements which can be controlled by a respective associated phase clock pulse (T1 or T2) and are decoupled from one another by the interposed adders (AE1 and AE2 or AE12 and AE22) of the stage respectively following next.

## Revendications

1. Procédé pour des installations de traitement de données pour la division d'opérandes d'une longueur quelconque, respectivement normalisées au départ, selon lequel lors de chaque pas de la division, deux bits sont préparés pour le quotient du dividende par le diviseur, et selon lequel lors du premier pas de la division, un premier reste partiel est formé par soustraction d'un multiple du diviseur, du dividende et, lors de chaque autre pas de la division, et en fonction du signe du reste partiel respectivement obtenu en dernier lieu, un multiple du diviseur est ajouté à ce reste partiel ou en est soustrait (procédé Two-Bit-Lookahead-Non-Restoring),
caractérisé par le fait

- que le nombre des multiples (DOR-M) du diviseur est choisi en fonction du nombre qui est déterminant pour l'obtention d'une redondance maximale de la division considérée,
- qu'on utilise un dispositif (SE) servant à préparer un multiple (DOR-M) du diviseur, lors de chaque pas de la division, et dans lequel le multiple du diviseur est fixé de façon nette et en fonction du diviseur (DOR) et de la valeur du reste partiel respectif (PR), des valeurs positives et négatives (par exemple ±D) étant prévues, en dehors de la valeur zéro (Z), pour les multiples du diviseur, en fonction de l'addition ou de la soustraction devant être exécutée,
- que lors d'un pas d'initialisation, la sélection d'un multiple non raccourci (par exemple DOR-M1) du diviseur pour le premier pas de la division s'effectue au moyen du dividende (DIV) raccourci à i chiffres binaires (par exemple i=5) et au moyen du diviseur (DOR) possédant le même nombre de chiffres binaires,
- que, lors du premier pas de division, le multiple sélectionné (par exemple -3/2 D) du diviseur est soustrait, sous une forme raccourcie, pour la formation du premier reste partiel (SUM1) ou simultanément à cet effet sous la forme raccourcie à k chiffres binaires (par exemple k = 8), respectivement du dividende (DIV) possédant le même nombre de chiffres binaires,
- que le résultat raccourci de la soustraction est à nouveau raccourci à i (par exemple i=5) de chiffres binaires, pour la sélection d'un multiple (par exemple DOR-M2) du diviseur pour le pas immédiatement suivant de la division,
- que, pendant chaque pas successif de la division, l'addition ou la soustraction est exécutée avec le multiple du diviseur, déterminé lors du pas respectif précédent de la division, et le reste partiel sous forme raccourcie et non raccourcie, d'éventuels reports (CY) de chiffres binaires de poids inférieur dans le reste partiel respectif n'étant pas pris en compte lors du raccourcissement à k (par exemple k = 8) chiffres binaires,
- que, lors de chaque pas de division, le signe (SIG) du reste partiel non raccourci déterminé (par exemple SUM1) et le multiple respectivement associé (par exemple DOR-M1) du diviseur forment les signaux de commande pour un dispositif (QE) servant à préparer respectivement deux bits de quotient (QUB), et
- qu'après chaque pas de la division, le reste partiel non raccourci (par exemple SUM1) est décalé respectivement de deux chiffres binaires vers les chiffres binaires de poids supérieur.

2. Procédé suivant la revendication 1, caractérisé par le fait que dans le cas d'une division d'opérandes à virgule fixe et lors de l'apparition d'un reste partiel négatif après le dernier pas de la division, une addition du multiple sélectionné en dernier lieu du diviseur et du reste partiel négatif est exécutée sur les longueurs d'opérandes non raccourcies.

3. Procédé suivant la revendication 1 ou 2, caractérisé par le fait que dans le cas d'une division d'opérandes à virgule fixe, le nombre des bits de quotient (QUOT) qui doivent être déterminés, est formé en fonction des amplitudes de décalage (DSDIV, BSDIV, DSDOR, BSDOR), nécessaires pour la représentation du dividende et du diviseur sous une forme normalisée.

4. Procédé suivant l'une des revendications 1 à 3, caractérisé par le fait
- que dans le cas d'une division d'opérandes à virgule mobile, le nombre des bits de quotient (QUOT) est formé en fonction de la position du premier bit dans la mantisse du quotient et par conséquent en fonction des amplitudes de décalage du dividende (DSDIV) et du diviseur (BSDOR) ainsi qu'en fonction de la valeur du bit de quotient déterminé dans la première position binaire, et
- que, lors du décalage du bit de quotient, la caractéristique de quotient (CHQUOT) est accrue de façon correspondante.

5. Procédé suivant l'une des revendications 1 à 4, caractérisé par le fait que respectivement deux pas successifs de la division sont réunis moyennant l'utilisation d'une trame de cadence à deux phases, dans laquelle respectivement une cadence de phase est associée de façon fixe à un pas de la division pour la retransmission du reste partiel respectivement déterminé selon une représentation raccourcie et non raccourcie pour le pas de la division immédiatement suivant.

6. Diviseur pour des installations de traitement de données pour la division d'opérandes d'une longueur quelconque, respectivement normalisés au départ, dans lequel lors de chaque pas de la division, deux bits sont préparés pour le quotient du dividende par le diviseur, et selon lequel lors du premier pas de la division, un premier reste partiel est formé par soustraction d'un multiple du diviseur, du dividende et, lors de chaque autre pas de la division, en fonction du signe du reste partiel respectivement obtenu en dernier lieu, un multiple du diviseur est ajouté à ce reste partiel ou en est soustrait,

caractérisé par la combinaison des particularités suivantes :

- des commutateurs de sélection (AWS1...AWS3), parmi lesquels deux commutateurs de sélection (AWS2 et AWS3) sont prévus pour la transmission directe du dividende non raccourci ou du reste partiel avec respectivement une partie somme (DIV ou SUM) et une partie de report (Z ou CY), tandis qu'un autre commutateur de sélection (AWS1) reçoit, à ses entrées, l'information de sélection (SEL et INI) pour le multiple du diviseur, qui doit être utilisé dans le premier pas de la division et dans chaque autre pas de la division,

- des registres d'entrée (SELR, REGV, REG), dont les entrées sont reliées aux sorties des commutateurs de sélection (AWS1...AWS3), la partie, raccourcie respectivement à k (par exemple k = 8) chiffres binaires, du dividende (DIV) ou du reste partiel (SUM) étant mémorisée dans un registre (REGV),

- un dispositif de multiplexage (MUX) pour la transmission d'un multiple du diviseur, qui est mémorisé dans des registres de données (DATREG) branchés en amont, et dont les entrées de commande sont raccordées aux sorties du registre d'entrée (SELR), qui contient l'information de sélection,

- des additionneurs (AE1 et AE2), qui sont branchés en parallèle et au premier (AE1) desquels peuvent être envoyés, en tant que signaux d'entrée, les k chiffres binaires (par exemple k = 8) du multiple respectivement transmis du diviseur ainsi que la partie, limitée à également k (par exemple k = 8) chiffres binaires, du dividende (DIV) ou du reste partiel (SUM), tandis que les entrées du second additionneur (AE2) sont reliées aux sorties des registres d'entrée (REG), qui contiennent les bits de somme (DIV ou SUM) et les bits de report (Z ou CY) du dividende ou du reste partiel non raccourci,

- un dispositif de commutation (SE), qui est constitué par deux unités (NW et QE), à la première (NW) desquelles sont envoyés, en tant que signaux d'entrée, les signaux de résultat, présents aux sorties du premier additionneur (AE) ainsi qu'un nombre réduit des signaux de sortie du registre de données contenant le diviseur (DOR), pour la délivrance des signaux d'informations (SEL) pour la sélection du multiple du diviseur, tandis que le signe (SIG) du résultat d'addition non raccourci des signaux de sorties (SEL) de la première unité (NW) sont envoyés à la seconde unité (QE) pour la délivrance de deux bits de quotient (QUB).

7. Diviseur suivant la revendication 6, caractérisé par le fait

- que le second additionneur (AE2) est constitué par assemblage modulaire de plusieurs additionneurs partiels (AD21, AD22), qui calculent en parallèle des parties du reste partiel non raccourci à partir des bits respectivement associés de somme et de report du reste partiel précédent et à partir du multiple choisi du diviseur,

- que les signaux de report, qui sont présents en parallèle sur les sorties des additionneurs partiels (AD21 et AD22), sont envoyés, sur la base d'éventuels reports à partir de positions binaires de poids inférieur et/ou sur la base des additions partielles exécutées, à une unité (CPL) pour la détermination du signe (SIG), et

- que la sortie de cette unité (CPL) est reliée à l'une des entrées de l'unité (QE) présente dans le dispositif de commutation (SE).

8. Diviseur suivant la revendication 6 ou 7, caractérisé par le fait qu'en aval du dispositif de commutation (SE) est branché un registre (QUOTR) servant à recevoir les bits (QUB) du quotient lors de chaque pas de division et dont le contenu précédent peut être déplacé respectivement de deux positions binaires en direction des chiffres binaires de poids supérieur.

9. Diviseur suivant la revendication 8, caractérisé par le fait qu'il est prévu deux étages de division (DIVW1 et DIVW2), qui sont branchés en série et sont agencés de la même manière, les registres d'entrée (SELR...REG ou SELR2...REG2) de chaque étage individuel étant réalisés sous la forme d'éléments de mémoire intermédiaires, qui peuvent être commandés par une cadence de phase respectivement associée (T1 ou T2) et sont découplés l'un de l'autre par les additionneurs intercalés (AE1 et AE2 ou AE12 et AE22)
de l'étage immédiatement suivant respectif.

# FIG 1

DIV= 1 0 1 0 1 1 0 0 0 0 0 1 0 0 0 0 0 0 0 $0_2$ = $35238_{10}$

DOR= 1 0 0 0 1 0 0 1 0 1 1 0 0 $1_2$ = $8793_{10}$

FP-DIVISION : DSDIV= 11,BSDIV= 1,DSDOR= 4,BSDOR= 2

N= (DSDOR · 8 - DSDIV) · 4 + BSDOR - BSDIV + 1 = 6

**FIG 2**

INITIALISIERUNG: $[DIV]$ = .101 $\}$ → DOR-M1= $-\frac{3}{2}$
$[DOR]$ = .100

AE1
0 1 2 3 4 5 6 7

6 a  1 0 1 0 1 1 0 0

b  0 0 1 1 0 0 0 1

c  1 1 0 1 1 1 0 1
[PR]
→ DOR-M= +1

AE2    CLA4
0 1 2 ... [0] [0] [1] =A/S

DIV=  1 0 1 0 1 1 0 0 0 0 1 0 0 0 0 0 ...

$-\frac{3}{2}$D=  0 0 1 1 0 0 0 1 1 1 1 0 1 0 0 1 1 ...

CY1=  [0] [0]
SUM1=  1 1 0 1 1 1 0 1 1 1 1 1 1 0 1 0 0

SIG < 0
DOR-M1= $-\frac{3}{2}$ $\}$ → QUB= 10

CYV1=  [0] [0]  [0] [0]
SUMV1=  0 1 1 1 0 1 1 1 1 1 0 1 0 0 0 0 ...

+DOR=  1 0 0 0 1 0 0 1 0 1 1 0 0 1 0 0 0 ...

CY2=  [0]  [0]
SUM2=  0 0 0 0 0 0 0 1 0 1 0 0 1 1 0 0 0

7 a  0 1 1 0 1 1 1

b  1 0 0 0 1 0 0 1

c  0 0 0 0 0 0 0 0
→ DOR-M3=0

SIG > 0
DOR-M2=+1 $\}$ → QUB= 10

CYV2=  [0]  [0]  [0]
SUMV2=  0 0 0 0 0 1 0 1 0 0 1 1 0 0 0 0 0 ...

Z=  0 0 0 0 0 0 0 0 0 0 0 0 0 0 0 0 0 ...

CY3=  [0] [0]
SUM3=  0 0 0 0 0 1 0 1 0 0 1 1 0 0 0 0 0

8 a  0 0 0 0 0 1 0 1

b  0 0 0 0 0 0 0 0

c  0 0 0 0 0 1 0 1

SIG > 0
DOR-M3=0 $\}$ → QUB= 00

QUOT= 0 0 0 ... 0 1 0 1 0 0 0 = $40_{10}$
0                        3 1

REST=  0 0 0 0 ... 0 1 0 1 0 0 1 1 0 0 0 = $664_{10}$
0                            3 1

GP-DIVISION: CHDIV= $30_{10}$,CHDOR= $10_{10}$,BSDIV= 0,BSDOR= 0
QUOT= 0 0 0 1 0 1 0 0 0 ... 0 0    CHQUOT= $20_{10}$
0                        2 3

# FIG 3

[DOR]

| [PR] | 00.100 | 00.101 | 00.110 | 00.111 |
|---|---|---|---|---|
| ≥ 01.000 | -3/2 | -3/2 | -3/2 | -3/2 |
| 00.111 | -3/2 | -3/2 | -1 | -1 |
| 00.110 | -3/2 | -3/2 | -1 | -1 |
| 00.101 | -3/2 | -1 | -1 | -1 |
| 00.100 | -1 | -1 | -1 | -1 |
| 00.011 | -1 | -1 | -1/2 | -1/2 |
| 00.010 | -1/2 | -1/2 | -1/2 | -1/2 |
| 00.001 | -1/2 | -1/2 | -1/2 | -1/2 |
| 00.000 | 0 | 0 | 0 | 0 |
| 11.111 | 0 | 0 | 0 | 0 |
| 11.110 | +1/2 | +1/2 | +1/2 | +1/2 |
| 11.101 | +1/2 | +1/2 | +1/2 | +1/2 |
| 11.100 | +1/2 | +1/2 | +1/2 | +1/2 |
| 11.011 | +1 | +1 | +1/2 | +1/2 |
| 11.010 | +1 | +1 | +1/2 | +1/2 |
| 11.001 | +3/2 | +1 | +1 | +1 |
| 11.000 | +3/2 | +3/2 | +1 | +1 |
| 10.111 | +3/2 | +3/2 | +1 | +1 |
| ≤ 10.110 | +3/2 | +3/2 | +3/2 | +3/2 |

TAB 1

| QUB | DOR-M | | | | | | |
|---|---|---|---|---|---|---|---|
| | -3/2 | -1 | -1/2 | 0 | +1/2 | +1 | +3/2 |
| SIG > 0 | 11 | 10 | 01 | 00 | 11 | 10 | 01 |
| SIG < 0 | 10 | 01 | 00 | 11 | 10 | 01 | 00 |

TAB 2

FIG 4